# EUROPÄISCHE PATENTANMELDUNG

(11) **EP 1 031 709 A2**
(43) Veröffentlichungstag der Anmeldung: **30.08.2000**
(21) Anmeldenummer: 00104012.0
(22) Anmeldetag: 25.02.2000
(51) Int. Cl.: F01N 3/28, B01J 35/04

(54) **Abgaskatalysator**

(30) Priorität: 25.02.1999 DE 19908125
(71) Anmelder: LEISTRITZ AG & CO. Abgastechnik, D-90765 Fürth (DE)
(72) Erfinder: Gürtler, Dr. Wolfgang, 91462 Dachsbach (DE); Nutz, Jörg, 90537 Feucht (DE)
(74) Vertreter: Tergau & Pohl Patentanwälte

(57) **Zusammenfassung**

Ein Abgaskatalysator für Kraftfahrzeuge umfaßt ein Gehäuse, ein im Gehäuse unter Freilassung eines radialen Spaltraumes angeordneten Monolithen und eine unter radialer Vorspannung im Spaltraum angeordneten Lagerungsmatte. Die erfindungsgemäße Ausgestaltung des Abgaskatalysators besteht nun darin, dass die Lagerungsmatte im wesentlichen aus hoch hitzebeständigen Metallfasern mit einem Äquivalentdurchmesser von maximal 200 µm besteht.

## Beschreibung

Die Erfindung betrifft einen Abgaskatalysator für Kraftfahrzeuge mit einem insbesondere keramischen, im folgenden als Monolith bezeichneten Katalysatorkörper. Der Monolith ist in einem metallischen Gehäuse mit Radialabstand gelagert, so dass zwischen ihm und dem Gehäuse ein Spaltraum vorhanden ist. In dem Spaltraum ist eine Lagerungsmatte mit radialer Vorspannung angeordnet, die den Monolithen sowohl im kalten als auch im erhitzten Betriebszustand im Gehäuse festhält. Die Vorspannung der Lagerungsmatte bzw. deren Rückstellkräfte müssen derart ausgelegt sein, dass die als Folge der Erwärmung auftretende Erweiterung des Spaltraums ausgeglichen wird und eine sichere Lagerung des Monolithen im Gehäuse während des Fahrzeugbetriebs gewährleistet ist. Im Falle von keramischen Katalysatorkörpern werden vielfach Mineralfasermatten verwendet. Es sind auch Mineralfasermatten bekannt, denen Blähglimmerpartikel zugesetzt sind, die bei den Betriebstemperaturen expandieren und so die Haltekraftverringerung bei sich erweiterndem Spaltraum kompensieren.

Nachteilig bei den bekannten Lagerungsmatten ist, dass Mineralfasern bzw. lungengängige Bruchstücke davon für den menschlichen Organismus nicht unbedenklich sind. Sowohl bei der Herstellung und beim Betrieb von Abgaskatalysatoren als auch bei deren späteren Entsorgung können Mineralfasern freigesetzt werden. Neben den Mineralfasermatten sind auch Drahtgestricke im Einsatz. Für diese Drahtgestricke werden relativ starke Drähte nach Art eines Kettenhemdes über Schlaufen miteinander verbunden. Die von solchen Lagerungsmatten ausgeübten Rückstellkräfte beruhen im Wesentlichen auf der elastischen Verformung der Drahtschlaufen. Nachteilig bei diesen Matten ist aber, dass sie den Spaltraum zwischen Monolith und Gehäuse nicht abdichten können, so dass zusätzliche Abdichtungsmaßnahmen zumindest im Bereich ihrer vorderen Stirnkante erforderlich sind. Für die kostengünsitge Herstellung wirkungsvoller Abdichtungen werden aber hauptsächlich wiederum Mineralfasern verwendet.

Aufgabe der Erfindung ist es, einen Abgaskatalysator vorzuschlagen, bei dem der Katalysatorkörper derart im Katalysatorgehäuse gelagert ist, dass die Verwendung von Mineralfasern nicht erforderlich ist.

Diese Aufgabe wird gemäß Anspruch 1 dadurch gelöst, dass die Lagerungsmatte im Wesentlichen aus hochhitzebeständigen Metallfasern mit einem Äquivalentdurchmesser von maximal 200 µm besteht. Metallfasern mit derart kleinen Durchmessern lassen sich aufgrund ihrer im Vergleich zu herkömmlichen Drahtgestrickmatten geringeren Steifigkeit bzw. ihrer höheren Flexibilität zu Mattengebilden verdichten, die zum einen eine ausreichend hohe Rückstellkraft im Spaltraum erzeugen und zum anderen den Spaltraum hermetisch abdichten. Besonders gute Ergebnisse werden mit Mineralfasern mit Durchmessern von 40 µm bis 200 µm erzielt. Bevorzugt werden Metallfasern verwendet, deren Äquivalentdurchmesser innerhalb einer Toleranzbreite von 44 µm bis 116 µm liegt. Ein allgemeines Problem bei aus Fasern aufgebauten Lagerungsmatten besteht darin, dass durch die pulsierenden Abgase Fasern aus dem Mattenverbund herausgelöst werden können, was zu einer Verringerung der Mattenhaltekraft führt. Um einen solchen Faseraustrag zu verhindern, werden vorzugsweise Metallfasern verwendet, deren Länge ein Vielfaches der Spaltraumweite entspricht. Bei einer weiteren bevorzugten Ausführungsform sind die Metallfasern zu einem filz- oder vliesähnlichen Gebilde verdichtet. Dadurch ist ihre Handhabung bei der Montage gegenüber im Ausgangszustand unverdichteten Matten erleichert. Die Verdichtung der Einzelfasern kann beispielsweise durch eine Vernadelung erfolgen, vorverdichtete und kompakte Mattengebilde können aber auch dadurch erhalten werden, dass Endlosfasern miteinander verstrickt oder verwirkt werden. Für die Herstellung der Fasern wird vorzugsweise ein korrosionsbeständiges Material, vorzugsweise eine Legierung verwendet, die sich aus 5 Gew.% Aluminium, 20 Gew.% Chrom und Eisen als Rest zusammensetzt, wobei übliche Legierungszusätze vorhanden sein können. Vorteilhaft ist es, wenn die aus diesem Material bestehenden Fasern Äquivalentdurchmesser im Bereich von 51 µm bis 109 µm aufweisen.

Bei einem bevorzugten Herstellungsverfahren für einen Abgaskatalysator der vorbeschriebenen Art wird dieser nach der Montage des Monolithen und der Lagerungsmatte im Gehäuse einer Wärmebehandlung unterzogen, bei der die Metallfasern zumindest kurzzeitig auf ihre Glühtemperatur erhitzt werden. Dabei kann die Wärmebehandlung Teil des Herstellungsprozesses sein oder später im Fahrzeugbetrieb erfolgen, letzteres insbesondere im Falle von Benzinmotoren. Es hat sich überraschenderweise gezeigt, dass durch eine solche Wärmebehandlung die Haltekraft der Lagerungsmatte erhöht wird. Bei einem besonders bevorzugten Verfahren wird eine Lagerungsmatte mit Metallfasern verwendet, die aus 5 Gew.% Aluminium, 20 Gew.% Chrom und Eisen als Rest besteht, wobei eine Erhitzung auf etwa 700°C erfolgt.

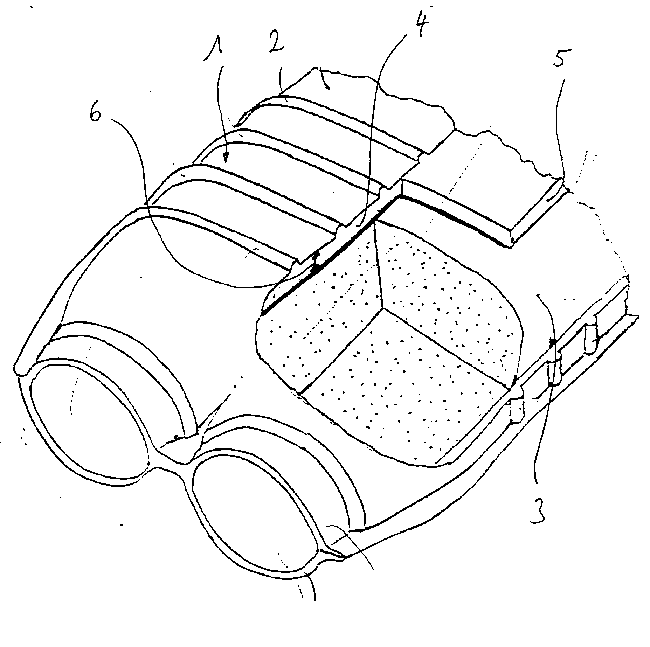

Die Erfindung wird nun anhand eines in der beigefügten Zeichnung dargestellten Ausführungsbeispieles näher erläutert.

In einem Gehäuse 1, das in üblicher Weise durch Sicken 2 verstärkt sein kann, ist ein Monolith 3 so angeordnet, dass zwischen ihm und dem Gehäuse ein Spaltraum 4 vorhanden ist. In diesem Spaltraum 4 ist die Lagerungsmatte 5 mit radialer Vorspannung angeordnet. Die Metallfasern der Lagerungsmatte 5 bestehen aus einer Legierung, die 5 Gew.% Aluminium, 20 Gew.% Chrom und Eisen als Rest enthält. Die Metallfasern haben einen Durchmesser von 80 µm, wobei die Toleranzbreite +/- 45% beträgt. Unter Fasern mit einem bestimmten Äquivalentdurchmesser sind solche Fasern zu verstehen, die entweder eine runde, den angegebenen Äquivalentdurchmesser aufweisenden Querschnitt haben oder solche Fasern, die von der runden Querschnittsform abweichen, die etwa oval ausgebildet sind, wobei jedoch deren Querschnittsfläche der Querschnittsfläche der kreisrunden Faser entspricht. Vor der Montage der Lagerungsmatte 5 im Spaltraum 4 hat diese ein wesentlich größeres Volumen als der Spaltraumweite 6 entspricht. Dabei sind die Mineralfasern derart lose angeordnet, daß die Porosität der Lagerungsmatte im unverbauten Zustand wenigstens 75 Volumen% beträgt. Bei der Montage erfolgt eine Kompression mit der Lagerungsmatte auf übliche Spaltraumweiten von beispielsweise 4 mm. Die Verdichtung der Metallfasern ist dabei derart, dass ein Durchströmen des Spaltraumes 4 in Axialrichtung 7 verhindert ist. Eine zusätzliche Abdichtung der Stirnkanten der Lagerungsmatte ist nicht erforderlich.

Um die Dichtwirkung der Lagerungsmatte zu erhöhen, kann es vorteilhaft sein, die Matte mit einem Stoff zu tränken, der die zwischen den Fasern vorhandenen Kapillarräume verschließt, der also die Mattenporosität verringert. Als ein solcher Stoff kommt z.B. Wasserglas in Betracht.

## Patentansprüche

1. Abgaskatalysator für Kraftfahrzeuge mit einem Gehäuse (1), einem in dem Gehäuse unter Freilassung eines radialen Spaltraumes (4) angeordneten Monolithen (3) und einer unter radialer Vorspannung im Spaltraum einliegenden Lagerungsmatte (5),
dadurch gekennzeichnet,
dass die Lagerungsmatte (5) im wesentlichen aus hochhitzebeständigen Metallfasern mit einem Äquivalentdurchmesser von maximal 200µm besteht.

2. Abgaskatalysator nach Anspruch 1,
gekennzeichnet durch
einen Äquivalentdurchmesser der Metallfasern von 40µm bis 200µm.

3. Abgaskatalysator nach Anspruch 2,
gekennzeichnet durch
einen Äquivalentdurchmesser der Metallfasern von 44µm bis 116µm.

4. Abgaskatalysator nach einem der Ansprüche 1 bis 3
dadurch gekennzeichnet,
dass die Länge der Fasern einem Vielfachen der Spaltraumweite (6) entspricht.

5. Abgaskatalysator nach einem der Ansprüche 1 bis 4,
dadurch gekennzeichnet,
dass die Metallfasern zu einem filz- oder vliesähnlichem Gebilde verarbeitet sind.

6. Abgaskatalysator nach einem der Ansprüche 1 bis 5,
dadurch gekennzeichnet,
dass die Lagerungsmatte (5) im unverbauten Zustand eine Porosität von wenigstens 75 % aufweist.

7. Abgaskatalysator nach einem der Ansprüche 1 bis 6,
dadurch gekennzeichnet,
dass die Metallfasern aus 5 Gew.% Aluminium, 20 Gew.% Chrom und Eisen als Rest bestehen.

8. Abgaskatalysator nach Anspruch 7,
gekennzeichnet durch
einen Äquivalentdurchmesser von 51µm bis 109µm.

9. Abgaskatalysator nach einem der Ansprüche 1 bis 8
dadurch gekennzeichnet,
das die Lagerungsmatte (5) mit einem deren Porosität verringernden Stoff getrennt ist.

10. Verfahren zur Herstellung eines Abgaskatalysators gemäß einem der Ansprüche 1 bis 8,
dadurch gekennzeichnet,
dass er nach der Montage des Monolithen (1) und der Lagerungsmatte (5) im Gehäuse (1) einer Wärmebehandlung unterzogen wird, bei der die Metallfasern der Lagerungsmatte (5) zumindest kurzzeitig auf ihre Glühtemperatur erhitzt werden.

11. Verfahren nach Anspruch 9,
dadurch gekennzeichnet,
dass eine Lagerungsmatte (5) mit aus 5 Gew.% Aluminium, 20 Gew.% Chrom und Eisen als Rest bestehenden Metallfasern verwendet und dass die Metallfasern auf ca. 700°C erhitzt werden.
